# FASCICULE DE BREVET EUROPEEN

(11) **EP 3 184 772 B1**
(45) Date de publication et mention de la délivrance du brevet: **08.05.2019**
(21) Numéro de dépôt: 16205592.5
(22) Date de dépôt: 21.12.2016
(51) Int. Cl.: F01N 3/20, F01N 13/18

(54) **RÉSERVOIR DE VÉHICULE COMPRENANT UNE MEMBRANE SEMI-PERMÉABLE**
FAHRZEUGBEHÄLTER, DER EINE HALBDURCHLÄSSIGE MEMBRAN UMFASST
VEHICLE TANK INCLUDING A SEMI-PERMEABLE MEMBRANE

(30) Priorité: 23.12.2015 FR 1563191
(43) Date de publication de la demande: 28.06.2017
(73) Titulaire: Plastic Omnium Advanced Innovation and Research, 1120 Bruxelles (BE)
(72) Inventeur: GUIGNERY, Frédéric, 95540 MERY-SUR-OISE (FR); FORRIERE, Frédéric, 60680 Grandfresnoy (FR); GUILLERME, Hervé, 60310 THIESCOURT (FR); LECLEC'H, Nicolas, 60280 Margny les Compiegne (FR)
(74) Mandataire: Potdevin, Emmanuel Eric

(56) Documents cités:
- EP-A2- 2 669 484
- DE-A1-102008 044 167
- DE-A1-102010 047 348
- DE-A1-102013 001 150
- FR-A1- 2 774 951
- US-A1- 2010 223 917
- US-B1- 6 196 409

## Description

L'invention concerne les réservoirs de liquide pour véhicule, en particulier les réservoirs comprenant un précurseur d'ammoniac, par exemple les réservoirs d'urée. Elle concerne également les réservoirs à carburant de véhicule.

Il est connu d'injecter un additif dans la ligne d'échappement d'un véhicule à moteur thermique afin de réduire les oxydes d'azote et assurer ainsi la dépollution des gaz d'échappement. À cette fin, le véhicule comprend un réservoir d'urée en solution aqueuse, l'urée étant un précurseur d'ammoniac et permettant de générer celle-ci à la demande. Il est connu d'utiliser à cette fin une solution eutectique d'urée.

Cette dernière gèle à environ -11°C. Lorsqu'elle se transforme en glace dans le réservoir, la glace est amenée à occuper un volume plus important que le liquide. Il s'agit donc d'éviter que la formation de glace génère une augmentation de pression dans le réservoir.

Les documents EP-2 492 128 ou FR-2 774 951, au nom de la demanderesse, divulguent un tel réservoir qui comprend un orifice de remplissage permettant d'introduire la solution dans le réservoir et un orifice de ventilation dans la paroi supérieure du réservoir. Cet orifice est équipé d'une membrane semi-perméable, plus précisément imperméable à la solution mais autorisant un faible passage d'air et de vapeur de la solution à travers la paroi. Dans ces conditions, lorsque la solution gèle en tout ou partie, l'augmentation de pression dans le réservoir entraîne un échappement progressif d'air ou de vapeur à travers cette membrane et finalement l'équilibrage de la pression. Par ailleurs, cette membrane interdit l'évacuation rapide des gaz faute de quoi, lors du remplissage avec la solution, il y aurait un risque de surremplissage. En effet, c'est l'augmentation de la pression à l'intérieur du réservoir lors du remplissage qui permet, via des moyens prévus à cet effet, de détecter que le niveau souhaité a été atteint.

Cette membrane est soudée à un organe qui est lui-même fixé à la paroi depuis l'extérieur du réservoir. Mais compte tenu des contraintes d'encombrement à bord du véhicule pour y loger le réservoir, le volume de cet organe nécessite d'abaisser la paroi supérieure du réservoir lors de sa conception et donc de réduire le volume disponible à l'intérieur de ce dernier pour la solution.

Un but de l'invention est donc d'éviter de réduire la capacité du réservoir.

À cet effet, on prévoit selon l'invention un réservoir de liquide pour véhicule selon la revendication 1.

Ainsi, le surmoulage assure le maintien de la membrane par des moyens de volume réduit. Ce mode de fixation permet donc de réduire le volume du support de la membrane fixé à la paroi, voire de se dispenser d'un tel support. Il n'est donc plus besoin de déporter la paroi du réservoir en vue de ménager une place pour un tel support. On peut ainsi augmenter le volume disponible à l'intérieur du réservoir pour un même encombrement offert dans le véhicule. De plus, le surmoulage procure une bonne fixation de la membrane au réservoir. Enfin, la section de la membrane laissée libre par le surmoulage sera celle disponible pour le passage des gaz. Il est donc possible de concevoir le réservoir et le surmoulage en déterminant cette section et donc en choisissant le débit de gaz autorisé.

De plus, c'est lors du moulage de la paroi elle-même que la membrane est fixée à cette dernière. On évite donc une opération spécifique pour cet assemblage. Comme il n'est plus nécessaire de prévoir un support spécifique pour porter la membrane, on simplifie la conception et la fabrication et on augmente encore le gain de volume disponible.

La grille, qui est peu encombrante, protège la membrane contre les chocs provenant de l'environnement externe du réservoir et contre le dépôt de poussières.

Avantageusement, la membrane s'étend à l'intérieur du réservoir, en-deçà d'une zone de la face externe de la paroi la plus proche de la membrane.

Ainsi, cette position de la membrane évite d'abaisser la paroi supérieure du réservoir au détriment du volume disponible dans ce dernier pour le liquide. On peut, le cas échéant, rapporter le support à la paroi depuis l'intérieur du réservoir.

On peut prévoir que l'organe recouvrant la face externe de la membrane comprend un capot externe.

Ce capot, en communication avec l'environnement extérieur au réservoir, assure lui aussi une protection de la membrane contre les chocs, en remplacement ou en complément de la grille précitée.

De préférence, le réservoir comprend un fût s'étendant à l'intérieur du réservoir à partir de la paroi et formant un volume délimité par la membrane.

Le fût protège la membrane contre des chocs internes au réservoir, dus notamment à des morceaux de glace qui viendraient heurter la membrane.

On peut prévoir d'agencer le réservoir de sorte que la membrane est visible depuis l'extérieur du réservoir, notamment à l'oeil nu.

Cela permet si besoin d'en contrôler l'état général, notamment la propreté et l'intégrité.

Dans un mode de réalisation, la paroi est une paroi horizontale du réservoir.

Dans un autre mode de réalisation, il s'agit d'une paroi latérale du réservoir.

Il n'est pas nécessaire en effet que cette membrane assure une ventilation à travers la paroi supérieure du réservoir, pourvu que cette ventilation ait lieu en partie supérieure du réservoir à partir d'un endroit qui ne risque pas d'être obstrué par de la glace ou du liquide du réservoir.

L'invention est applicable à un réservoir d'un précurseur d'ammoniac ou encore à un réservoir de carburant. En effet, les réservoirs de carburant sont soumis eux aussi à des problématiques de ventilation, même s'ils ne sont pas concernés par un risque de gel en général.

Nous allons maintenant présenter plusieurs modes de réalisation de l'invention et des exemples illustratifs à l'appui des figures sur lesquelles :
- la figure 1 est une vue en perspective d'un réservoir d'un précurseur d'ammoniac selon un mode de réalisation de l'invention ;
- la figure 2 est une vue en coupe suivant un plan vertical de la coque supérieure du réservoir de la figure 1 ;
- la figure 3 est une vue schématique à plus grande échelle montrant la fixation de la membrane dans la coque de la figure 2 ; et
- la figure 4 est une vue analogue à la figure 3 montrant un exemple illustratif ;
- la figure 5 est une vue schématique montrant un autre exemple illustratif ;
- la figure 6 est une vue schématique selon un second mode de réalisation de l'invention ;
- la figure 7 est une vue schématique représentant un exemple illustratif du réservoir de la figure 5.

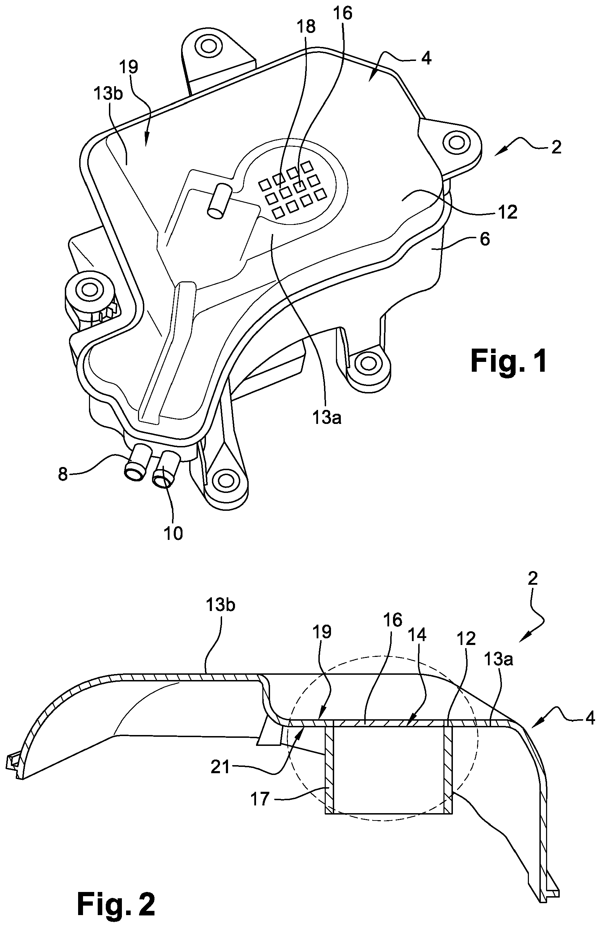

Nous allons présenter un premier mode de réalisation du réservoir selon l'invention en référence aux figures 1 à 3.

Le réservoir 2 de véhicule automobile est en l'espèce destiné à contenir une solution d'un précurseur d'ammoniac, en l'espèce une solution aqueuse eutectique d'urée telle que celle commercialisée sous la marque AdBlue®.

Le réservoir comprend une coque supérieure 4 et une coque inférieure 6, toutes les deux réalisées par injection en matière plastique. Ces deux coques (ou demi-coques) sont assemblées l'une à l'autre à leurs bords périphériques principaux pour former un réservoir fermé.

Les matériaux utilisés pour réaliser les coques sont des thermoplastiques qui peuvent être des homopolymères ou des copolymères tels que des polyoléfines, des polyvinyles, des polyvinyles halogénés tels que le polyvinyl chloride (PVC) ou le polyvinyle fluoride (PVDH), ou encore des polyamides (PA). Préférentiellement, on utilise pour ce genre d'application des polyoléfines telles que du polyéthylène (PE) et plus particulièrement du polyéthylène haute densité (PEHD) en raison de son inertie chimique et de sa bonne tenue mécanique. Ces matériaux peuvent contenir des additifs tels que des produits stabilisants, des charges de renfort ou des produits plastifiants. La matière plastique de la coque supérieure 4 est par exemple un PEHD tel que celui commercialisée sous la référence Lupolen GX5038.

Le réservoir comprend sur un côté, dans la coque inférieure ici, une tubulure 8 destinée à être reliée à un conduit de remplissage du réservoir en solution, cette tubulure communiquant avec l'intérieur du réservoir. Il comprend également une tubulure 10 destinée à assurer la ventilation du réservoir pendant ce remplissage c'est-à-dire un échappement de gaz (de l'air et des vapeurs de la solution) sous l'effet du remplissage du réservoir avec le liquide. Ces deux tubulures sont agencées en l'espèce environ à mi-hauteur du réservoir, dans une paroi latérale.

La coque supérieure 4 forme une paroi principale supérieure 12 et des parois principales latérales du réservoir. Cette paroi supérieure 12 comprend une ou plusieurs parties planes horizontales 13a, 13b parallèles entre elles. On qualifie ces parties d'horizontales car elles se trouvent ainsi lorsque le réservoir est en position d'utilisation à bord du véhicule et que ce dernier se trouve lui aussi à l'horizontale. Les organes associés au réservoir, notamment les organes internes du réservoir, sont prévus et disposés pour une telle utilisation. Ces parties ne sont pas nécessairement coplanaires, ce qui est d'ailleurs le cas ici puisque la partie 13a est en retrait, en direction de l'intérieur du réservoir, par rapport à la partie 13b. Toutefois, selon des variantes du présent mode de réalisation, les parties 13a et 13b sont coplanaires de façon à optimiser le volume du réservoir 2.

La partie 13a présente une ouverture traversante circulaire 14 ménagée dans la matière plastique de la paroi. Cette ouverture est occupée par une membrane plane 16, par exemple en forme de disque. Toute la circonférence de la membrane est fixée à la paroi par surmoulage comme expliqué plus loin. Grâce à cet agencement et au fait que la membrane est réalisée dans un matériau semi-perméable, elle empêche la sortie du liquide hors du réservoir par l'ouverture 14. Cette membrane est par ailleurs perméable à l'air et aux vapeurs émanant de la solution d'urée. Elle permet donc la traversée de la membrane puis de l'ouverture 14 par l'air et de telles vapeurs. La membrane fait donc communiquer l'intérieur du réservoir avec l'atmosphère c'est-à-dire l'air ambiant environnant le réservoir dans le véhicule.

La membrane 16 est formée par un textile ou une couche poreuse. Elle est par exemple réalisée dans un matériau hydrophobe comprenant du polytétrafluoroéthylène (PTFE), par exemple l'un de ceux commercialisés sous la marque Goretex®. Mais d'autres matériaux hydrophobes ou repoussant l'eau conviennent aussi.

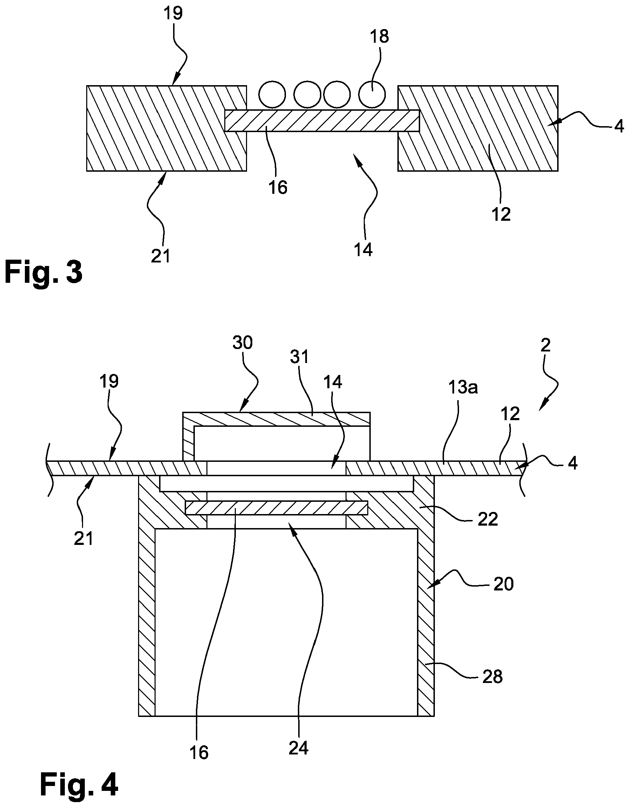

Dans ce mode de réalisation, la paroi 12 est surmoulée sur la membrane 16 de sorte que le pourtour de cette dernière est entièrement emprisonné dans l'épaisseur de la paroi en matière plastique, comme illustré à la figure 3. La membrane se trouve donc directement fixée à la paroi 12, en retrait de la face externe 19 de la paroi, en direction de l'intérieur du réservoir. Elle se trouve aussi ici en retrait de la face interne 21 de la paroi, la paroi étant plus épaisse que la membrane 16. Par conséquent, la partie de paroi 13a s'étend davantage vers l'intérieur du réservoir que la membrane

Pour cela, lors de la fabrication de la coque supérieure 4 par injection, on utilise un moule qui comprend un poinçon et une matrice. Un robot dispose la membrane 16 entre ceux-ci de sorte qu'ils viennent au contact des deux faces respectives opposées de la membrane lors de la fermeture du moule, ce qui permet l'injection de la matière plastique tout autour de celle-ci sans recouvrir totalement cette dernière.

On fait ici remarquer que, lors du surmoulage, la matière plastique est susceptible de pénétrer dans la membrane au niveau de sa partie surmoulée. Mais elle peut dans certains cas intégralement rester en surface de la membrane. En effet, on ne recherche pas ici nécessairement une fusion de matière ou une soudure entre la matière de la membrane et celle de la paroi (ou du support de membrane comme on le verra dans le deuxième mode de réalisation). Cette pénétration dépend de la porosité de la membrane. Comme les orifices de la membrane sont en général très fins, la matière du réservoir ne pénètre pas totalement celle de la membrane. On réalise donc essentiellement une adhésion physique en surface. Puisque ce mode de fixation s'apparente à une encapsulation, il n'y a pas d'impératif de compatibilité chimique entre la matière de la membrane et celle de la paroi.

En prévoyant que la membrane est maintenue sur toute sa partie centrale durant le surmoulage, elle n'est pas détériorée durant l'injection de la matière plastique fondue.

On remarquera qu'il n'est pas nécessaire de chauffer la membrane avant l'injection.

En l'espèce, la paroi 12 se prolonge au-dessus de la membrane par une grille 18 qui recouvre la face supérieure de la membrane et est d'une seule pièce avec le reste de la paroi 12. Cette grille laisse libres certaines zones de la membrane pour préserver un passage de gaz à travers celle-ci. Cette grille est réalisée elle aussi à l'occasion de l'opération de moulage par injection, le moule étant conformé pour former la grille. La surface de la membrane laissée libre sert pour l'évacuation du gaz. Lors de la conception du réservoir, le choix de la superficie correspondante permet donc de déterminer le débit de gaz souhaité à une pression donnée. On peut choisir de donner au disque formant la membrane par exemple un rayon de 25 mm à l'état nu, pour une section de passage une fois reçu dans le réservoir réduite de moitié. Une partie de la membrane est visible à travers la grille lorsqu'on observe le réservoir à l'oeil nu depuis l'extérieur, par le dessus.

La membrane est donc directement fixée à demeure à la paroi en s'étendant tout entière à l'intérieur du réservoir, et tout entière en deçà d'une zone de la face externe 19 qui correspond à la partie 13a, qui est la partie de la paroi 12 la plus proche de la membrane.

Le réservoir comprend en outre dans le présent exemple un fût cylindrique 17 dont un bord supérieur est relié à la face interne 21 de la partie 13a de la paroi 12. Le fût s'étend verticalement à l'intérieur du réservoir en direction de la coque inférieure. Ce fût est ouvert en partie inférieure et fermé par la membrane en partie supérieure. Il est par exemple réalisé lui aussi d'une seule pièce avec la paroi 12 à l'occasion de l'injection. Il contribue à protéger la membrane des chocs internes, par exemple en présence de morceaux de glace dans la solution.

On décrit également un réservoir illustré à la figure 4. Il comprend dans l'ensemble les mêmes éléments que celui du premier mode de réalisation de sorte que les éléments communs ne seront pas décrits à nouveau. Seul change le mode de fixation de la membrane à la paroi 12.

Cette fois, le réservoir comprend en effet un support 20 portant la membrane 16 et qui est lui-même fixé à la partie 13a de la paroi 12 en étant rapporté à la paroi après injection de cette dernière.

Le support 20 comprend ainsi une bague ou couronne 22 en matière plastique surmoulée sur la membrane 16 de sorte que la membrane occupe une ouverture centrale 24 de la couronne de la même façon qu'elle occupait dans le premier mode l'ouverture 14 de la paroi 12.

La couronne est fixée à la paroi 12, par exemple par soudage par ultrasons, contre la face interne 21 de cette dernière. Elle est disposée de sorte que la membrane 16 vienne en regard de l'ouverture 14, par en-dessous. La membrane peut au choix être en contact avec l'ouverture ou à distance de cette dernière.

La membrane 16 est constituée de la même façon que dans le premier mode. Il s'agit donc à nouveau d'une membrane semi-perméable étanche à la solution et permettant un passage à travers la paroi de l'air et de la vapeur provenant du liquide.

Dans cet exemple illustratif, on peut prévoir à titre optionnel de prolonger la couronne vers le bas par un fût 28 s'étendant à l'intérieur du réservoir et faisant partie du support 20 qui est d'une seule pièce ici.

On prévoit en outre en l'espèce un capot 30 s'étendant au-dessus de l'ouverture 14, à distance de cette dernière, à l'extérieur du réservoir en étant fixé, par exemple par soudage, à la face externe 19 de la partie 13a de la paroi 12. Ce capot a en l'espèce une forme de parallélépipède rectangle mais pourrait avoir une autre forme. Il comprend une paroi supérieure principale 31 parallèle à la paroi 12, distante de cette dernière et entièrement fermée afin de protéger l'ouverture 14 et la membrane 16 à l'égard des chocs. Cette paroi 31 est prolongée sur trois côtes fixés à la paroi 12 de sorte que le capot est ouvert au moins sur un côté pour assurer une communication de gaz entre l'environnement extérieur du réservoir et l'ouverture 14 et par conséquent aussi avec la paroi 12 et l'intérieur du réservoir. Ce capot est lui aussi réalisé en matière plastique. La membrane 16 demeure visible à l'oeil nu depuis le dessus du réservoir à travers l'ouverture latérale du capot, de biais.

Dans cet exemple illustratif, la membrane 16 est donc fixée à demeure à la paroi 12 en s'étendant tout entière à l'intérieur du réservoir, et tout entière en deçà d'une zone de la face externe 19 qui correspond à la partie 13a, qui est la partie de la paroi 12 la plus proche de la membrane. Elle se trouve même cette fois en-deçà et à distance de la face interne 21 de la partie 13a.

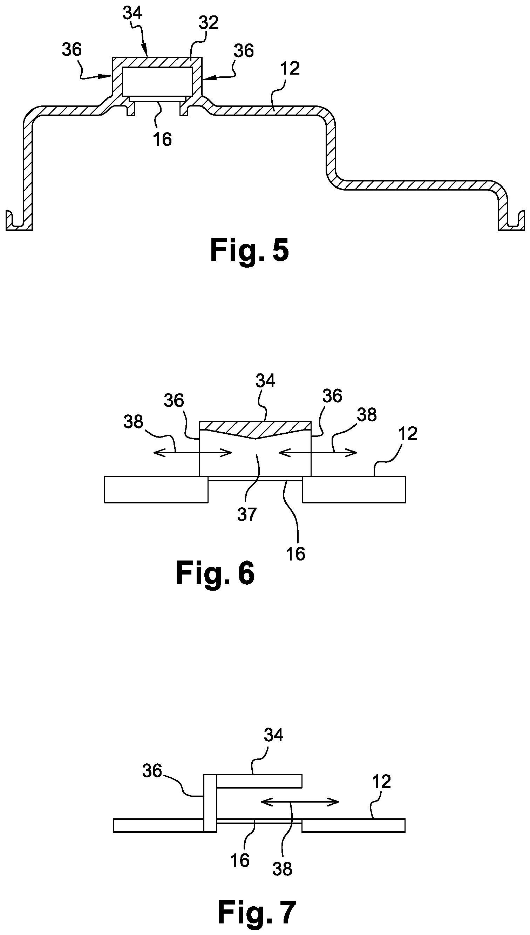

Dans un autre exemple illustratif illustré à la figure 5, la membrane 16, identique à celle du premier mode de réalisation et du précédent exemple illustratif, peut être protégée des chocs provenant de l'environnement externe du réservoir et du dépôt de poussières par une extension 32 de la paroi 12 formant une structure en forme de boîtier et en saillie du reste de la paroi 12 du réservoir. Ce boîtier a une forme de parallélépipède rectangle mais cette forme peut être différente.

Plus précisément, la membrane 16 est protégée par une paroi supérieure 34 entièrement fermée. La paroi 12 est surmoulée sur la membrane et la paroi 34 s'étend au-dessus de la membrane 16 dans un plan parallèle à celui de la membrane 16 et à distance de ce dernier. La paroi 34 est maintenue dans cette position par des parois latérales 36 s'étendant autour de la membrane 16 et perpendiculairement à cette dernière. Une communication d'air de la membrane 16 avec l'extérieur du réservoir est ménagée entre la membrane et la paroi 34.

Pour cela, dans le second mode de réalisation de l'invention illustré à la figure 6, les parois latérales 36 comprennent une architecture permettant le passage de gaz entre l'extérieur et l'espace 37 délimité par l'extension 32 et par conséquent entre l'intérieur et l'extérieur du réservoir. Il peut par exemple s'agir de grilles présentes sur les parois latérales 36 ou de tout autre moyen permettant de tels échanges gazeux représentés par les flèches 38.

Dans un autre exemple illustré à la figure 7, au moins une des parois 36 est retirée afin de créer un passage permettant des échanges gazeux représentés par la flèche 38.

L'extension 32 de la paroi 12 est réalisée à l'aide de tiroirs compris dans le moule et coulissant après moulage afin de pouvoir extraire le réservoir comprenant l'extension 32 du moule.

Bien entendu, on pourra apporter à l'invention de nombreuses modifications sans sortir du cadre de celle-ci telle qu'elle est définie par les revendications.

L'invention est applicable aux réservoirs de carburant.

La membrane pourra être fixée à une paroi latérale du réservoir et non à sa paroi supérieure, pourvu que l'ouverture 14 et la membrane 16 se trouvent en partie supérieure du réservoir, au-dessus du niveau maximal de remplissage avec le liquide. Si la membrane est fixée à une paroi latérale et s'étend dans une position verticale, par exemple un plan vertical, elle est moins soumise au dépôt de poussières et de débris.

On peut prévoir qu'un même réservoir comprenne plusieurs membranes de ce type, disposées à plusieurs endroits, et par exemple associées à différents dômes de la coque supérieure du réservoir, comme c'est le cas fréquemment pour un réservoir à configuration en selle.

## Revendications

1. Réservoir de liquide (2) pour véhicule, le réservoir étant agencé pour contenir un liquide prédéterminé, le réservoir comprenant :
- une paroi (12) présentant une ouverture (14), et
- au moins une membrane semi-perméable (16) étanche au liquide et permettant un passage d'air et de vapeur provenant du liquide à travers la membrane et l'ouverture,
le réservoir comprenant un organe (18, 30, 31, 34) recouvrant une face externe de la membrane, **caractérisé en ce qu'**une partie de la paroi (12) est surmoulée sur la membrane et **en ce que** l'organe comprend une grille (18) qui est d'une seule pièce avec la paroi.

2. Réservoir selon la revendication 1, dans lequel la membrane s'étend à l'intérieur du réservoir, en-deçà d'une zone de la face externe (19) de la paroi la plus proche de la membrane.

3. Réservoir selon au moins l'une quelconque des revendications précédentes dans lequel l'organe recouvrant la face externe de la membrane comprend un capot externe (30).

4. Réservoir selon au moins l'une quelconque des revendications précédentes qui comprend un fût (28) s'étendant à l'intérieur du réservoir à partir de la paroi (12) et formant un volume délimité par la membrane.

5. Réservoir selon au moins l'une quelconque des revendications précédentes, agencé de sorte que la membrane est visible depuis l'extérieur du réservoir, notamment à l'oeil nu.

6. Réservoir selon au moins l'une quelconque des revendications précédentes dans lequel la paroi (12) est une paroi horizontale ou une paroi latérale du réservoir.

7. Réservoir selon au moins l'une quelconque des revendications précédentes formant un réservoir pour un précurseur d'ammoniac ou un réservoir de carburant.

## Patentansprüche

1. Flüssigkeitsbehälter (2) für ein Fahrzeug, wobei der Behälter eingerichtet ist, um eine vorbestimmte Flüssigkeit zu enthalten, wobei der Behälter umfasst:
- eine Wand (12), die eine Öffnung (14) aufweist, und
- mindestens eine halbdurchlässige Membran (16), die flüssigkeitsdicht ist und einen Durchgang von Luft und von Dampf, die von der Flüssigkeit stammen, durch die Membran und die Öffnung erlaubt,
wobei der Behälter ein Organ (18, 30, 31, 34) umfasst, das eine Außenseite der Membran bedeckt, **dadurch gekennzeichnet, dass** ein Teil der Wand (12) auf der Membran aufgeformt ist und dass das Organ ein Gitter (18) umfasst, das mit der Wand einstückig ist.

2. Behälter nach Anspruch 1, wobei sich die Membran im Inneren des Behälters unterhalb einer Zone der Außenseite (19) der Wand erstreckt, die der Membran am nächsten ist.

3. Behälter nach mindestens einem der vorangehenden Ansprüche, wobei das Organ, das die Außenseite der Membran bedeckt, eine äußere Abdeckung (30) umfasst.

4. Behälter nach mindestens einem der vorangehenden Ansprüche, der einen Schaft (28) umfasst, der sich im Inneren des Behälters aus der Wand (12) erstreckt und ein durch die Membran begrenztes Volumen bildet.

5. Behälter nach mindestens einem der vorangehenden Ansprüche, der derart eingerichtet ist, dass die Membran von außerhalb des Behälters insbesondere mit dem bloßen Auge sichtbar ist.

6. Behälter nach mindestens einem der vorangehenden Ansprüche, wobei die Wand (12) eine horizontale Wand oder eine seitliche Wand des Behälters ist.

7. Behälter nach mindestens einem der vorangehenden Ansprüche, der einen Behälter für einen Ammoniakvorläufer oder einen Kraftstoffbehälter bildet.

## Claims

1. Liquid tank (2) for a vehicle, the tank being designed to contain a predetermined liquid, the tank comprising:
- a wall (12) having an opening (14), and
- at least one liquid-tight semipermeable membrane (16) that allows air and vapour originating from the liquid to pass through the membrane and the opening,
the tank comprising a member (18, 30, 31, 34) covering an external face of the membrane, **characterized in that** a part of the wall (12) is overmoulded on the membrane, and **in that** the member comprises a grating (18) which is in one piece with the wall.

2. Tank according to Claim 1, wherein the membrane extends inside the tank, below a region of the external face (19) of the wall that is closest to the membrane.

3. Tank according to at least either one of the preceding claims, wherein the member covering the external face of the membrane comprises an external cover (30) .

4. Tank according to at least any one of the preceding claims, which comprises a tube (28) that extends inside the tank from the wall (12) and forms a volume delimited by the membrane.

5. Tank according to at least any one of the preceding claims, which is designed such that the membrane is visible from the outside of the tank, notably to the naked eye.

6. Tank according to at least any one of the preceding claims, wherein the wall (12) is a horizontal wall or a lateral wall of the tank.

7. Tank according to at least any one of the preceding claims, which forms a tank for an ammonia precursor or a fuel tank.
